# FASCICULE DE BREVET EUROPEEN

(11) **EP 2 804 027 B1**
(45) Date de publication et mention de la délivrance du brevet: **07.06.2017**
(21) Numéro de dépôt: 14167315.2
(22) Date de dépôt: 07.05.2014
(51) Int. Cl.: G02B 3/00, G02B 19/00, G02B 27/09

(54) **Dispositif optique de réglage de la distribution spatiale d'un faisceau laser**
Optische Vorrichtung zur Einstellung der Raumverteilung eines Laserstrahls
Optical device for adjusting the spatial distribution of a laser beam

(30) Priorité: 14.05.2013 FR 1301101
(43) Date de publication de la demande: 19.11.2014
(73) Titulaire: Compagnie Industrielle des Lasers Cilas, 45100 Orléans (FR)
(72) Inventeur: Grasser, Régis, 45160 OLIVET (FR); Cussat-Blanc, Sandrine, 45510 VIENNE EN VAL (FR)
(74) Mandataire: Gevers & Orès

(56) Documents cités:
- EP-A1- 1 873 559
- WO-A1-95/00865
- US-A- 5 612 821
- US-A1- 2003 063 390
- US-A1- 2012 249 621
- US-B1- 6 552 760

## Description

La présente invention concerne un dispositif optique de réglage de la distribution spatiale d'un faisceau laser.

Elle concerne également un système d'observation actif comprenant un tel dispositif optique, notamment pour des applications de défense et de sécurité.

De façon usuelle, un système d'observation actif comprend une caméra de réception pour réaliser des images d'une scène à observer. Un tel système d'observation actif utilise, de plus, une illumination laser pour augmenter la qualité de l'image afin d'obtenir une meilleure capacité d'identification ou pour mettre en évidence une cible spécifique dans le champ de vision.

La source laser destinée à mettre en oeuvre l'illumination laser comprend, généralement, un moyen de réglage de la forme du faisceau laser pour adapter le champ de vision observé au canal de réception de la caméra.

L'objectif de ce moyen de réglage de la forme du faisceau laser est de transformer la forme de la distribution spatiale de la source laser en une forme généralement proche d'un rectangle uniforme.

Par ailleurs, dans un tel système d'observation actif, l'optique d'illumination doit présenter des capacités de zoom (ou d'agrandissement) et être ajustable pour modifier la taille du champ de vision illuminé.

L'approche usuelle est de séparer la fonction de réglage de forme (en un rectangle uniforme) et la fonction de zoom.

Généralement, la génération de forme du faisceau est mise en oeuvre à l'aide d'un conduit de lumière ou d'une matrice de lentilles comme indiqué ci-dessous, et la fonction de zoom est gérée à travers une optique de grossissement avec une longueur focale variable.

Une manière usuelle de réaliser un réglage du faisceau en générant une illumination uniforme dans le champ lointain à partir d'un faisceau laser quelconque, est d'utiliser un ensemble de deux éléments identiques à matrices de lentilles se faisant face. Lorsque la lumière traverse cet ensemble, la distribution en champ proche reste la même et la distribution en champ lointain est homogénéisée. Par rapport à la technique d'homogénéisation à conduit de lumière, le volume requis pour cette solution à base de matrices de lentilles est plus réduit.

Malgré ces caractéristiques, la solution usuelle prévoyant des moyens différents pour mettre en oeuvre les deux fonctions précitées (réglage de la forme et zoom) présente des inconvénients notamment en termes de complexité, de taille, de volume et de coût.

La présente invention concerne un dispositif optique de réglage de la distribution spatiale d'un faisceau laser qui permet de remédier à ces inconvénients. Le document US 2003/063390 A1 divulgue un dispositif optique de réglage selon la préambule de la revendication 1. A cet effet, selon l'invention, ledit dispositif optique du type comportant un ensemble de deux matrices de lentilles, lesdites matrices étant identiques et agencées parallèlement l'une par rapport à l'autre avec un espacement uniforme entre elles, ledit ensemble étant susceptible d'être traversé par le faisceau laser, est remarquable en ce qu'il comporte, de plus, des moyens d'actionnement commandables aptes à modifier l'écartement entre les deux matrices pour créer un effet de zoom (ou d'agrandissement).

De plus, avantageusement, ledit dispositif comporte des moyens d'interface permettant à un opérateur de commander lesdits moyens d'actionnement.

Ainsi, grâce à l'invention, on agit sur l'ensemble de matrices (qui est apte à régler de façon usuelle la forme du faisceau) afin que ce dernier génère également un effet de zoom.

Pour cela, on modifie l'écartement entre les deux matrices, par rapport à un écartement nominal.

Par conséquent, les deux fonctions (réglage de la forme et zoom) sont mises en oeuvre par un seul et même ensemble (au lieu de deux moyens différents). Ceci permet de réduire l'encombrement et la masse, et de fournir une solution d'illumination plus simple et de coût réduit.

Bien qu'il soit envisageable d'agir sur le déplacement des deux matrices, dans un mode de réalisation particulier simplifié lesdits moyens d'actionnement sont configurés pour déplacer uniquement l'une desdites matrices par rapport à l'autre dans le but de modifier l'écartement.

En outre, dans un mode de réalisation préféré, pour augmenter l'amplitude de l'effet de zoom, chacune des deux matrices dudit ensemble comprend au moins deux types différents de lentilles, présentant des distances focales différentes.

Les divers types de lentilles présentant des distances focales légèrement différentes, l'écartement nominal est donc différent d'un type de lentille à l'autre. Chacun des écartements nominaux permettant au type de lentille associé de générer un effet de zoom correspondant, en modifiant l'écartement sur tous ces écartements nominaux, on augmente l'amplitude de l'effet de zoom dudit dispositif de réglage.

Dans une première variante de ce mode de réalisation préféré, chacune des deux matrices comprend au moins un groupe d'au moins deux types différents de lentilles, et ledit groupe de types différents de lentilles est agencé selon un motif qui est reproduit une pluralité de fois sur chacune desdites matrices. De préférence, ledit motif est reproduit uniformément sur lesdites matrices.

Dans une seconde variante de ce mode de réalisation préféré, chacune des deux matrices dudit ensemble comprend, pour chacun des types différents de lentilles, au moins un ensemble de lentilles identiques adjacentes, et lesdits ensembles (formant par exemple une ligne ou une colonne, ou bien une figure géométrique telle qu'un carré ou un rectangle) sont reproduits une pluralité de fois, de préférence uniformément, sur chacune desdites matrices.

La présente invention concerne également une unité d'illumination laser comportant au moins une source laser et un dispositif de réglage de la distribution spatiale, tel que celui précité.

La présente invention concerne, en outre, un système d'observation actif, du type comportant au moins :
- une source laser qui est apte à émettre au moins une impulsion laser ;
- une caméra susceptible de prendre l'image d'un champ de vision illuminé par ladite source laser ; et
- une unité de commande qui commande simultanément ladite source laser et ladite caméra.

Selon l'invention, ce système d'observation actif est remarquable en ce qu'il comporte, de plus, au moins un dispositif de réglage de la distribution spatiale, tel que celui précité.

La présente invention concerne également un procédé de réglage de la distribution spatiale d'un faisceau laser, procédé selon lequel on prévoit un ensemble de deux matrices de lentilles, lesdites matrices étant identiques et agencées parallèlement l'une par rapport à l'autre avec un espacement uniforme entre elles, ledit ensemble étant susceptible d'être traversé par le faisceau laser. Selon l'invention, on modifie l'écartement entre les deux matrices pour créer un effet de zoom à l'aide dudit ensemble de matrices.

En outre, avantageusement, chacune des deux matrices dudit ensemble comprend au moins un groupe d'au moins deux types différents de lentilles, présentant des distances focales différentes, et on agence ledit groupe de types différents de lentilles selon un motif qui est reproduit une pluralité de fois sur chacune desdites matrices.

Les figures du dessin annexé feront bien comprendre comment l'invention peut être réalisée. Sur ces figures, des références identiques désignent des éléments semblables.
La figure 1 illustre très schématiquement un dispositif conforme à l'invention.
Les figures 2A et 2B montrent schématiquement la forme de la distribution spatiale d'un faisceau laser, générée par un dispositif conforme à l'invention, respectivement dans un champ proche et dans un champ lointain.
Les figures 3A et 4A montrent un mode de réalisation simplifié d'un dispositif conforme à l'invention.
Les figures 3B et 4B montrent un mode de réalisation préféré d'un dispositif conforme à l'invention, présentant une amplitude de zoom accrue.
Les figures 5 et 6 illustrent des variantes du mode de réalisation préféré, présentant une amplitude de zoom accrue.

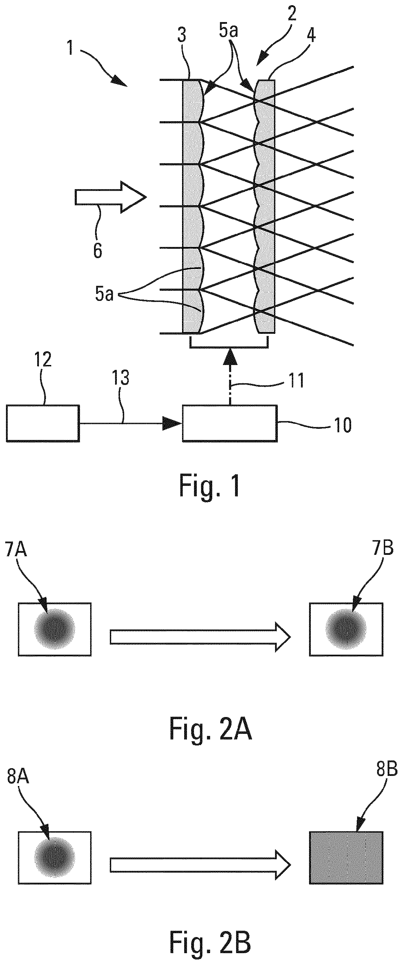

Le dispositif optique 1 conforme à l'invention et représenté schématiquement sur la figure 1 est destiné à régler la distribution spatiale, en forme et taille, d'un faisceau laser.

Ce dispositif optique 1 comporte, de façon usuelle, un ensemble 2 de deux matrices 3 et 4 de lentilles 5a se faisant face, pour adapter la forme de la distribution spatiale du faisceau laser 6 susceptible de traverser cet ensemble 2. Ces deux matrices 3 et 4 sont identiques et elles sont agencées parallèlement l'une par rapport à l'autre, donc avec un espacement uniforme entre elles.

Cet ensemble 2 apte à régler la forme spatiale du faisceau permet de transformer la distribution spatiale de la source laser en une forme généralement proche d'un rectangle uniforme, pour un écartement approprié entre les matrices 3 et 4 dit écartement nominal. Lorsque la lumière traverse cet ensemble 2 :
- la distribution en champ proche reste la même, comme représenté sur la figure 2A, avec 7A et 7B les distributions en amont et en aval de l'ensemble 2 ; et
- la distribution en champ lointain est homogénéisée (comme représenté sur la figure 2B, avec 8A et 8B les distributions en amont et en aval de l'ensemble 2), en une forme proche d'un rectangle uniforme, adapté au champ de vision d'un élément optique, notamment d'une caméra. La taille des matrices 3 et 4 (qui sont identiques) dépend des caractéristiques du faisceau laser 6. Toutefois, à titre d'illustration, les dimensions peuvent être de l'ordre de un pouce (environ 2,5 centimètres) en hauteur et largeur, et moins de 10 mm en longueur.

Selon l'invention, ce dispositif optique 1 de réglage de la distribution spatiale comporte, de plus, des moyens d'actionnement 10, par exemple de type piézoélectrique, qui sont commandables et qui sont aptes à modifier l'écartement entre les deux matrices 3 et 4, tout en les maintenant parallèles, comme illustré schématiquement par une flèche 11 en traits mixtes sur la figure 1.

Bien qu'il soit envisageable d'agir sur le déplacement des deux matrices 3 et 4, dans un mode de réalisation particulier simplifié, lesdits moyens d'actionnement 10 sont configurés pour déplacer uniquement l'une desdites matrices par rapport à l'autre dans le but de modifier l'écartement.

Par ailleurs, ledit dispositif 1 comporte également une unité d'interface homme/machine 12 permettant à un opérateur de commander lesdits moyens d'actionnement 10, via une liaison 13.

La présente invention prévoit donc de changer l'écartement entre les deux matrices 3 et 4, par rapport à un écartement nominal Da.

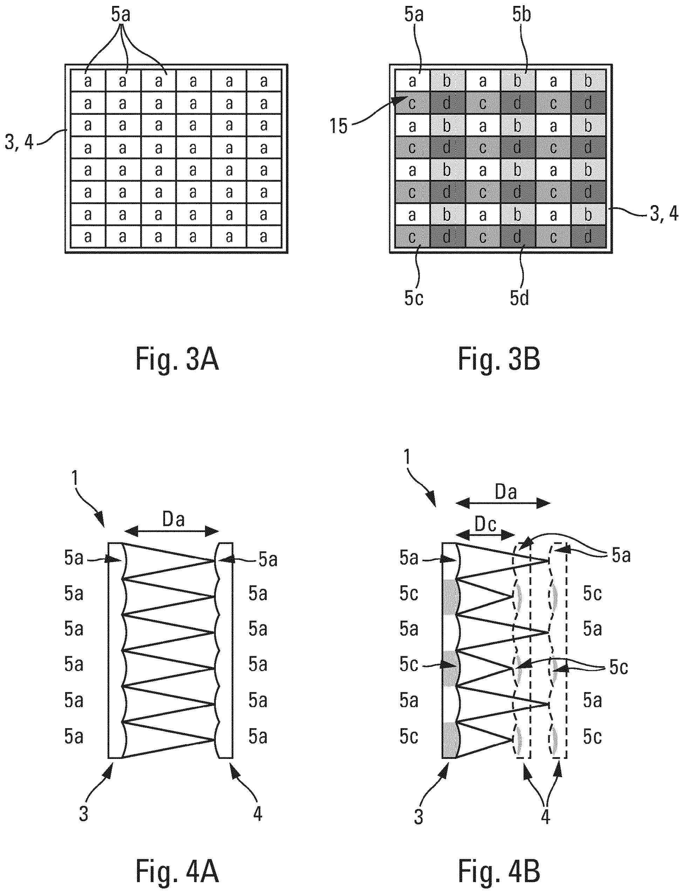

Dans un mode de réalisation simplifié représenté sur les figures 3A et 4A, toutes les lentilles 5a (mises en évidence par « a » sur la figure 3A pour des raisons de simplification du dessin) de chacune des matrices 3 et 4 sont identiques. Quand l'ensemble 2 est placé dans un train optique, la distance nominale Da doit être respectée pour obtenir la fonction de zoom.

Toutefois, avec des matrices 3 et 4 comprenant des lentilles identiques 5a, cette technique de zoom reste limitée. En effet, au-delà de 25% de part et d'autre de l'écartement nominal Da (correspondant environ à un effet de zoom de « x 0.8 » à « x 1.1 »), la qualité de l'illumination baisse ainsi que l'efficacité.

Aussi, dans un mode de réalisation préféré, pour augmenter l'amplitude de l'effet de zoom, chacune des deux matrices 3 et 4 comprend au moins deux types différents de lentilles, présentant des distances focales légèrement différentes.

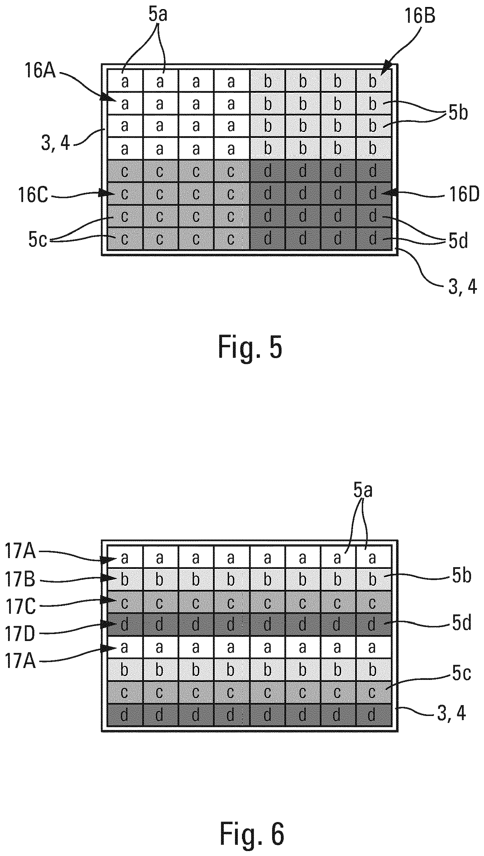

Dans l'exemple des figures 3B et 4B (ainsi que dans ceux des figures 5 et 6) relatif à ce mode de réalisation préféré, chaque matrice 3, 4 comprend quatre types différents 5a, 5b, 5c et 5d de lentilles.

Dans l'exemple des figures 3B et 4B, un ensemble de quatre types différents de lentilles adjacentes 5a, 5b, 5c et 5d forme un motif 15 qui est reproduit une pluralité de fois, sur chacune des matrices 3 et 4.

Comme représenté sur la figure 3B, le motif 15 des quatre lentilles 5a, 5b, 5c, 5d (mises en évidence par les lettres « a », « b », « c » et « d » sur cette figure 3B pour des raisons de simplification du dessin) est donc reproduit de façon uniforme, en ligne et en colonne, sur lesdites matrices 3 et 4. Les mêmes motifs 15 des deux matrices 3 et 4 se font face.

Les différents types de lentilles 5a, 5b, 5c et 5d présentant des distances focales légèrement différentes, l'écartement nominal est différent d'un type de lentille à l'autre. Aussi, quand l'ensemble 2 est placé dans le train optique, une série d'écartements nominaux peut être obtenu.

La figure 4B illustre deux écartements nominaux Da et Dc correspondant respectivement aux deux types de lentilles 5a et 5c.

Pour ce mode de réalisation préféré de la figure 3B, il n'existe pas d'écartement nominal global pour tous les types de lentilles 5a à 5d. La qualité de l'homogénéisation est ainsi légèrement réduite par rapport à l'architecture simplifiée de la figure 3A. Toutefois, la réduction de performance reste faible et est constante sur une large gamme d'écartement. Ce mode de réalisation préféré permet d'obtenir un effet de zoom optique de « x3 ».

Dans une variante de ce mode de réalisation préféré, chacune des deux matrices 3, 4 comprend, pour chacun des types différents de lentilles 5a, 5b, 5c, 5d (mises en évidence par les lettres « a », « b », « c » et « d » sur les figures 5 et 6 pour des raisons de simplification du dessin), un ensemble de lentilles identiques adjacentes. A titre d'illustration, sur l'exemple de la figure 5, les types de lentilles 5a à 5d forment respectivement des ensembles 16A à 16D, et sur l'exemple de la figure 6 les types de lentilles 5a à 5d forment respectivement des ensembles 17A à 17D. Lesdits ensembles (formant par exemple une ligne ou une colonne, ou bien une figure géométrique telle qu'un carré ou un rectangle) sont reproduits une pluralité de fois, de préférence de façon uniforme, sur chacune desdites matrices 3, 4. En particulier :
- sur l'exemple de la figure 5, chacun desdits ensembles 16A à 16D présente une forme rectangulaire, une autre forme étant également possible ; et
- sur l'exemple de la figure 6, chacun desdits ensembles 17A à 17D représente une ligne de la matrice 3, 4. Il pourrait également s'agir d'une colonne de la matrice 3, 4.

Bien entendu, les motifs 15 et les ensembles 16A à 16D et 17A à 17D sont reproduits un nombre élevé de fois sur les matrices 3 et 4, bien que le nombre de reproductions soit réduits sur les figures 3B, 5 et 6 pour des raisons de simplification de dessin.

Par conséquent, grâce à l'invention, on obtient une réduction de la complexité, de la taille et du volume des moyens destinés à mettre en oeuvre les deux fonctions (réglage de la forme et zoom). Le dispositif 1 conforme à l'invention, destiné à ce but, est plus petit, plus léger et moins coûteux qu'un système utilisant une optique de zoom usuelle.

Le dispositif 1 conforme à l'invention tel que décrit ci-dessus peut faire partie d'une unité d'illumination laser (non représentée) comportant au moins une source laser.

Ledit dispositif 1 peut également faire partie d'un système d'observation actif (également non représenté), en particulier d'un système d'observation actif du type comportant :
- au moins une source laser, qui est apte à émettre au moins une impulsion laser (pour illuminer une scène de l'environnement), et à laquelle est associé ledit dispositif 1 ;
- une caméra susceptible de prendre l'image d'une scène illuminée par ladite source laser, par exemple au travers dudit obturateur. Dans ce cas, ladite caméra peut comprendre un obturateur commandable susceptible d'être amené, de façon alternative, dans une position ouverte, dans laquelle il laisse passer ladite impulsion laser, et une position fermée dans laquelle il empêche le passage de ladite impulsion laser ; et
- une unité de commande qui commande simultanément ladite source laser et ladite caméra, ainsi que le cas échéant ledit obturateur.

## Revendications

1. Dispositif optique de réglage d'un faisceau laser, ledit dispositif (1) comportant un ensemble (2) de deux matrices (3, 4) de lentilles (5a, 5b, 5c, 5d), lesdites matrices (3, 4) étant agencées parallèlement l'une par rapport à l'autre, ledit ensemble (2) étant susceptible d'être traversé par le faisceau laser (6), lesdites matrices (3,4) présentant au moins un écartement nominal de sorte que ledit ensemble (2) permet de transformer la distribution spatiale du faisceau laser (6) en une forme proche d'un rectangle uniforme en champ, **caractérisé en ce que** ledit dispositif de réglage d'un faisceau laser est un dispositif de réglage de la distribution spatiale d'un faisceau laser, **en ce que** lesdites matrices (3, 4) sont identiques, et **en ce que** ledit dispositif comporte des moyens d'actionnement (10) commandables, aptes à modifier l'écartement entre les deux matrices (3, 4) tout en les maintenant parallèles pour créer un effet de zoom.

2. Dispositif selon la revendication 1,
**caractérisé en ce qu'**il comporte des moyens d'interface (12) permettant à un opérateur de commander lesdits moyens d'actionnement (10).

3. Dispositif selon l'une des revendications 1 et 2,
**caractérisé en ce que** lesdits moyens d'actionnement (10) sont configurés pour déplacer uniquement l'une desdites matrices (3, 4) par rapport à l'autre afin de modifier l'écartement.

4. Dispositif selon l'une des revendications 1 à 3,
**caractérisé en ce que** chacune des deux matrices (3, 4) dudit ensemble (2) comprend au moins deux types différents de lentilles (5a, 5b, 5c, 5d) présentant des distances focales différentes.

5. Dispositif selon la revendication 4,
**caractérisé en ce que** chacune des deux matrices (3, 4) comprend au moins un groupe d'au moins deux types différents de lentilles (5a, 5b, 5c, 5d), et **en ce que** ledit groupe de types différents de lentilles est agencé selon un motif (15) qui est reproduit une pluralité de fois sur chacune desdites matrices (3, 4).

6. Dispositif selon la revendication 4,
**caractérisé en ce que** chacune des deux matrices (3, 4) comprend, pour chacun des types différents de lentilles (5a, 5b, 5c, 5d), au moins un ensemble (16A, 16B, 16C, 16D ; 17A, 17B, 17C, 17D) de lentilles identiques adjacentes, et **en ce que** lesdits ensembles (16A, 16B, 16C, 16D ; 17A, 17B, 17C, 17D) sont reproduits une pluralité de fois sur chacune desdites matrices (3, 4).

7. Unité d'illumination laser comportant au moins une source laser, **caractérisée en ce qu'**elle comporte, de plus, un dispositif optique (1) de réglage de la distribution spatiale, tel que celui spécifié sous l'une quelconque des revendications 1 à 6.

8. Système d'observation actif, du type comportant au moins :
- une source laser qui est apte à émettre au moins une impulsion laser ;
- une caméra susceptible de prendre l'image d'un champ de vision illuminé par ladite source laser ; et
- une unité de commande qui commande simultanément ladite source laser et ladite caméra,
**caractérisé en ce qu'**il comporte, de plus, un dispositif optique (1) de réglage de la distribution spatiale, tel que celui spécifié sous l'une quelconque des revendications 1 à 6.

9. Procédé de réglage de la distribution spatiale d'un faisceau laser, procédé selon lequel on prévoit un ensemble (2) de deux matrices de lentilles (3, 4), lesdites matrices (3, 4) étant identiques et agencées parallèlement l'une par rapport à l'autre, lesdites matrices (3,4) présentant au moins un écartement nominal de sorte que ledit ensemble (2) permet de transformer la distribution spatiale du faisceau laser (6) en une forme proche d'un rectangle uniforme en champ lointain, ledit ensemble (2) étant susceptible d'être traversé par le faisceau laser (6), procédé selon lequel on modifie l'écartement entre les deux matrices (3, 4) tout en les maintenant parallèles pour créer un effet de zoom à l'aide dudit ensemble (2) de matrices (3, 4).

10. Procédé selon la revendication 9,
**caractérisé en ce que** chacune des deux matrices (3, 4) dudit ensemble (2) comprend au moins deux types différents de lentilles, (5a, 5b, 5c, 5d), présentant des distances focales différentes.

## Patentansprüche

1. Optische Vorrichtung zur Einstellung eines Laserstrahls, wobei die Vorrichtung (1) eine Anordnung (2) aus zwei Matrizen (3, 4) mit Linsen (5a, 5b, 5c, 5d) umfasst, wobei die Matrizen (3, 4) parallel zueinander angeordnet sind, wobei die Anordnung (2) eingerichtet ist, von dem Laserstrahl (6) durchquert zu werden, wobei die Matrizen (3, 4) mindestens einen solchen nominalen Abstand aufweisen, dass es die Anordnung (2) ermöglicht, die räumliche Verteilung des Laserstrahls (6) in einer Form umzuwandeln, die einem gleichmäßigen Rechteck im Feld nahe ist, **dadurch gekennzeichnet, dass** die Vorrichtung zur Einstellung eines Laserstrahls eine Vorrichtung zur Einstellung der räumlichen Verteilung eines Laserstrahls ist, dass die Matrizen (3, 4) identisch sind, und dass die Vorrichtung ferner steuerbare Betätigungsmittel (10) umfasst, die eingerichtet sind, den Abstand zwischen den zwei Matrizen (3, 4) zu ändern, während sie parallel gehalten werden, um einen Zoom-Effekt zu erzeugen.

2. Vorrichtung nach Anspruch 1, **dadurch gekennzeichnet, dass** sie Schnittstellenmittel (12) aufweist, die es einer Bedienungsperson ermöglichen, die Betätigungsmittel (10) zu steuern.

3. Vorrichtung nach einem der Ansprüche 1 und 2, **dadurch gekennzeichnet, dass** die Betätigungsmittel (10) konfiguriert sind nur eine der Matrizen (3, 4) relativ zu der anderen zu bewegen, um den Abstand zu ändern.

4. Vorrichtung nach einem der Ansprüche 1 bis 3, **dadurch gekennzeichnet, dass** jede der zwei Matrizen (3, 4) der Anordnung (2) mindestens zwei verschiedene Arten von Linsen umfasst (5a, 5b, 5c, 5d), die unterschiedliche Brennweiten aufweisen.

5. Vorrichtung nach Anspruch 4, **dadurch gekennzeichnet, dass** jede der zwei Matrizen (3, 4) zumindest eine Gruppe von mindestens zwei verschiedenen Arten von Linsen (5a, 5b, 5c, 5d) umfasst, und dass die Gruppe von verschiedenen Arten von Linsen in einem Muster angeordnet ist, (15), das mehrere Male auf jeder der zwei Matrizen (3, 4) wiedergegeben wird.

6. Vorrichtung nach Anspruch 4, **dadurch gekennzeichnet, dass** jede der zwei Matrizen (3, 4) für jede der verschiedenen Arten von Linsen (5a, 5b, 5c, 5d) mindestens eine Anordnung (16A, 16B, 16C, 16D; 17A, 17B, 17C, 17D) mit benachbarten identischen Linsen umfasst, und dass die Anordnungen (16A, 16B, 16C, 16D; 17A, 17B, 17C, 17D) mehrere Male auf jeder der zwei Matrizen (3, 4) wiedergegeben wird.

7. Laserbeleuchtungseinheit, die zumindest eine Laserquelle umfasst, **dadurch gekennzeichnet, dass** sie ferner eine optische Vorrichtung (1) zur Einstellung der räumlichen Verteilung eines Laserstrahls umfasst, wie sie in einem der Ansprüche 1 bis 6 angegeben ist.

8. System zur aktiven Beobachtung vom Typ, der zumindest umfasst:
- eine Laserquelle, die eingerichtet ist, mindestens einen Laserimpuls zu emittieren;
- eine Kamera, die eingerichtet ist, ein Bild von einem Sichtfeld zu machen, das von der Laserquelle beleuchtet wird; und
- eine Steuereinheit, die gleichzeitig die Laserquelle und die Kamera steuert,
**dadurch gekennzeichnet, dass** es ferner eine optische Vorrichtung (1) zur Einstellung der räumlichen Verteilung eines Laserstrahls umfasst, wie sie in einem der Ansprüche 1 bis 6 angegeben ist.

9. Verfahren zur Einstellung der räumlichen Verteilung eines Laserstrahls, wobei in dem Verfahren eine Anordnung (2) aus zwei Matrizen (3,4) mit Linsen vorgesehen ist, wobei die Matrizen (3, 4) identisch sind und relativ zueinander parallel angeordnet sind, wobei die Matrizen (3, 4) mindestens einen solchen nominalen Abstand aufweisen, dass es die Anordnung (2) ermöglicht, die räumliche Verteilung des Laserstrahls (6) in eine Form umzuwandeln , die nahe einem gleichmäßigen Rechteck in einem Fernfeld ist, wobei die Anordnung (2) eingerichtet ist, von dem Laserstrahl (6) durchquert zu werden, wobei gemäß dem Verfahren der Abstand zwischen den zwei Matrizen (3, 4) geändert wird, während sie parallel gehalten werden, um einen Zoom-Effekt mit Hilfe der Anordnung (2) der Matrizen (3, 4) zu erzeugen.

10. Verfahren nach Anspruch 9, **dadurch gekennzeichnet, dass** jede der zwei Matrizen (3, 4) der Anordnung (2) mindestens zwei verschiedene Arten von Linsen (5a, 5b, 5c, 5d) umfasst, die unterschiedliche Brennweiten aufweisen.

## Claims

1. Optical device for adjusting a laser beam, said device (1) comprising an assembly (2) of two matrices (3, 4) of lenses (5a, 5b, 5c, 5d), said matrices (3, 4) being arranged parallel to one another, said assembly (2) being traversable by the laser beam (6), said matrices (3, 4) having at least a nominal spacing such that said assembly (2) makes it possible to transform the spatial distribution of the laser beam (6) into a shape close to an uniform rectangle in the far field, **characterized in that** said device for adjusting a laser beam is a device for adjusting the spatial distribution of a laser beam, **in that** said matrices (3, 4) are identical, and it that said device comprises controllable activating means (10) capable of modifying the spacing between the two matrices (3, 4) whilst keeping them parallel to create a zoom effect.

2. Device according to claim 1,
**characterized in that** it comprises interface means (12) enabling an operator to control said activating means (10).

3. Device according to one of claims 1 and 2,
**characterized in that** said activating means (10) are configured to displace only one of said matrices (3, 4) in relation to the other in order to modify the spacing.

4. Device according to one of claims 1 to 3,
**characterized in that** each of the two matrices (3, 4) of said assembly (2) comprises at least two different types of lens (5a, 5b, 5c, 5d) with different focal distances.

5. Device according to claim 4,
**characterized in that** each of the two matrices (3, 4) comprises at least one group of at least two different types of lens (5a, 5b, 5c, 5d), and **in that** said group of different types of lens is arranged according to a pattern (15) that is reproduced a plurality of times on each of said matrices (3, 4).

6. Device according to claim 4,
**characterized in that** each of the two matrices (3, 4) comprises, for each of the different types of lens (5a, 5b, 5c, 5d), at least one assembly (16A, 16B, 16C, 16D; 17A, 17B, 17C, 17D) of identical adjacent lenses and **in that** said assemblies (16A, 16B, 16C, 16D; 17A, 17B, 17C, 17D) are reproduced a plurality of times on each of said matrices (3, 4).

7. Laser illumination unit comprising at least one laser source, **characterized in that** it also comprises an optical device (1) for adjusting the spatial distribution, as specified in any one of claims 1 to 6.

8. Active observation system of the type comprising at least:
- a laser source that is capable of emitting at least one laser pulse;
- a camera capable of capturing the image of a field of vision illuminated by said laser source; and
- a control unit that simultaneously controls said laser source and said camera,
**characterized in that** it also comprises an optical device (1) for adjusting the spatial distribution, as specified in any one of claims 1 to 6.

9. Method for adjusting the spatial distribution of a laser beam, according to which method an assembly (2) of two matrices of lenses (3, 4) is provided, said matrices (3, 4) being identical and arranged parallel to one another, said matrices (3, 4) having at least a nominal spacing such that said assembly (2) makes it possible to transform the spatial distribution of the laser beam (6) into a shape close to an uniform rectangle in the far field, said assembly (2) being traversable by the laser beam (6), according to which method the spacing between the two matrices (3, 4) is modified whilst keeping them parallel to create a zoom effect by means of said assembly (2) of matrices (3, 4).

10. Method according to claim 9,
**characterized in that** each of the two matrices (3, 4) of said assembly (2) comprises at least two different types of lens (5a, 5b, 5c, 5d) having different focal distances.
